# EUROPEAN PATENT SPECIFICATION

(11) **EP 1 877 689 B1**
(45) Date of publication and mention of the grant of the patent: **15.09.2010**
(21) Application number: 06733061.3
(22) Date of filing: 12.04.2006
(51) Int. Cl.: F16L 11/08

(54) **FLEXIBLE PIPE AND METHOD FOR MANUFACTURING THE SAME**
FLEXIBLES ROHR UND HERSTELLUNGSVERFAHREN DAFÜR
TUYAU SOUPLE ET SON PROCEDE DE PRODUCTION

(30) Priority: 20.04.2005 NL 1028820
(43) Date of publication of application: 16.01.2008
(60) Divisional application: 10165324.4
(73) Proprietor: Trelleborg Velp B.V., 6718 ZD Ede (NL)
(72) Inventor: KNOL, Dirk, NL-7421 LH Deventer (NL)
(74) Representative: Vernout, Robert
(86) International application number: PCT/NL2006/050082
(87) International publication number: WO 2006/112710

(56) References cited:
- DE-A1- 2 345 455
- FR-A- 792 388
- GB-A- 1 573 189

## Description

The invention relates to a flexible pipe for transporting abrasive slurry, comprising a tubular body of a flexible polymer, such as rubber, and a multitude of coaxial, wear-resistant rings provided in the polymer along the length of the tube, which rings and which tubular body have substantially the same internal diameter.

Such a pipe is known from GB-A-1,573,189.

While the term "pipes" is used herein, the invention also relates to flexible expansion pieces, bends, reducing pieces and T-pieces. Many of these products are used as flexible couplings in pipes through which abrasive slurries are pumped. These products are used in, for example, the dredging industry, the sand and gravel extraction industry, the diamond mining industry and the oil-sand industry. Developments in the dredging industry have been such that increasingly abrasive mixtures are being pumped.

The invention also relates to new pipes which, before use, have a flexible (rubber) internal lining that covers the wear-resistant rings, part of which flexible internal lining has worn away after the pipe has been used for some time, as a result of which the inner surface of the rings becomes exposed, so that the internal diameter of the rings and that of the tubular body are only at least substantially the same after some period of usage.

Pipes for slurry transportation are generally built up of an interior wearing layer of rubber (or another polymer), one or more inlays, possibly steel vacuum rings or a coil and an outer layer. The wear-resistant rings function to slow down the wearing process, for example by preventing sharp objects in the slurry cutting through the rubber wearing layer over a large distance.

Said rings are usually formed of steel plate, cut, rolled and welded. Common kinds of steel are used, but also high-tensile and wear-resistant kinds, such as Creusabro^{™} and Hardox^{™}.

The object of the invention is to provide a flexible pipe which is more resistant to wear and damage.

According to a first aspect of the invention, the thickness of the rings near their inner circumference is to that end smaller over at least part of their circumference than the thickness of the rings near their outer circumference. Various properties of the pipe can be improved by using this configuration of the rings, such as the bending radius, the life and the stiffness. In particular the anchoring of the rings in the pipe is improved in this manner.

In a special embodiment the tubular body is bent, with the average thickness of the rings on the side of the inside bend being smaller than the average thickness of the rings near the outside bend.

In a first embodiment, the cross-section of the aforesaid part of the rings is substantially trapezoidal, and in a next preferred embodiment the cross-section of the aforesaid part of the rings is substantially T-shaped.

Preferably, the rings comprise an annular part spaced from their inner circumference that has a ductility higher than that of the rings near the inner circumference. As a result, undesirable fracture of the rings is prevented, whilst a high resistance to wear can nevertheless be obtained. This aspect can be used as a separate invention. Consequently, the invention also relates to a flexible pipe for transporting abrasive slurry, comprising a tubular body of a flexible polymer, such as rubber, and a multitude of coaxial, wear-resistant rings provided in the polymer along the length of the tube, wherein said rings and said tubular body have at least substantially the same internal diameter, and wherein the rings comprise an annular part spaced from their inner circumference that has a ductility higher than that of the rings near the inner circumference.

Preferably, the part having the higher ductility is made of mild steel, whilst the part having the lower ductility is made of cast iron, hard-faced steel or a ceramic material.

The invention also relates to a conical, flexible pipe for transporting abrasive slurry, comprising a conical, tubular body of a flexible polymer, such as rubber, and a multitude of coaxial, wear-resistant rings provided in the polymer along the length of the tube, wherein the internal diameter of the rings and that of the tubular body gradually increases in the axial direction, being at least substantially the same, and wherein the inner surface of the rings is conical. The conicity of said inner surface is preferably identical to the conicity of the pipe.

The invention also relates to a method for manufacturing a flexible pipe for transporting abrasive slurry, wherein a tubular body of a flexible polymer, such as rubber, is formed, and wherein coaxial, wear-resistant rings are provided in the polymer along the length of the tube, which rings and which tubular body have at least substantially the same internal diameter, **characterised in that** the rings are made by moulding a heated, flowable metal or a ceramic powder in a mould. Cast iron, cast steel, a cast ceramic material and other materials that can be processed by means of a casting technique or sintering or pressing techniques may be used for this purpose. Such techniques enable a high degree of freedom in moulding this type of rings, such as the various rings discussed in the description.

The invention will now be explained in more detail in the following description of embodiments thereof, which are illustrated in the figures, in which:
Figure 1 is a schematic, longitudinal sectional view of a part of a flexible pipe provided with wear-resistant rings in various embodiments thereof;
Figures 2, 3 and 4 are cross-sectional views of various embodiments of a wear-resistant ring;
Figure 5 is a schematic, longitudinal sectional view of a bent flexible pipe provided with wear-resistant rings according to one embodiment; and
Figure 6 is a schematic, a longitudinal sectional view of a conical, flexible pipe provided with wear-resistant rings.

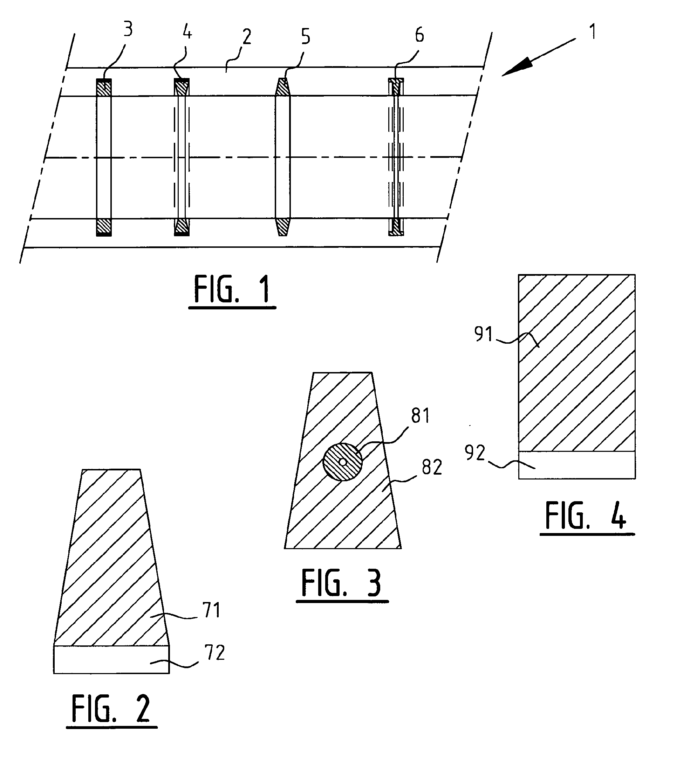

According to figure 1, a flexible pipe 1 that is used in dredging comprises a rubber tubular part 2, which is provided with wear-resistant rings 3, 4, 5, 6 in various embodiments thereof. Figure 1 is merely a schematic representation, in a practical embodiment identical wear-resistant rings 3, 4, 5, 6 will generally be used. Furthermore, besides the rubber tubular part 2 and the rings 3, 4, 5, 6, a flexible pipe 1 will usually also comprise at least an outer layer arranged around the rubber part 2.

The wear-resistant rings 3, 4, 5, 6 are provided in coaxial, regularly spaced-apart relationship in the rubber part 2, with the rings 3, 4, 5, 6 and the rubber part 2 having the same internal diameter, so that a substantially smooth inner surface of the flexible pipe 1 alternately consisting of rubber and a wear-resistant material is obtained. The outer surface of the rubber part 2 only consists of rubber.

The wear-resistant ring 3 is of rectangular section. The wear-resistant ring 4 is of trapezoidal section, with the thickness of the ring 4 being smaller near the inner diameter than near the outer diameter. The wear-resistant ring 5 is of trapezoidal section, with the thickness of the ring 4 being larger near the inner diameter than near the outer diameter. The wear-resistant ring 6 has a T-shaped section, with the thickness of the ring 6 being smaller near the inner diameter than near the outer diameter.

According to figure 2 and figure 3, the rings 7, 8, whose shape corresponds to that of the ring 4 of figure 1, is made of materials having two different hardnesses. The ring 7 of figure 2 consists of a subring 71 of a hard, highly wear-resistant material such as hardfacing steel along the outer circumference, and a subring 72 of a ductile, less breakable material such as mild steel along the inner circumference. The ring 8 of figure 3 consists of a hollow ring 81 of a hard, highly wear-resistant material such as hardfacing steel, the cavity of said ring being filled with a ring 82 of circular section made of a ductile, less breakable material, such as mild steel. In figure 4, too, the ring 9 is built up of subrings 91, 92 of materials having two different hardnesses, similar to the ring 2 of figure 2, with this difference that the ring 9 is of rectangular section.

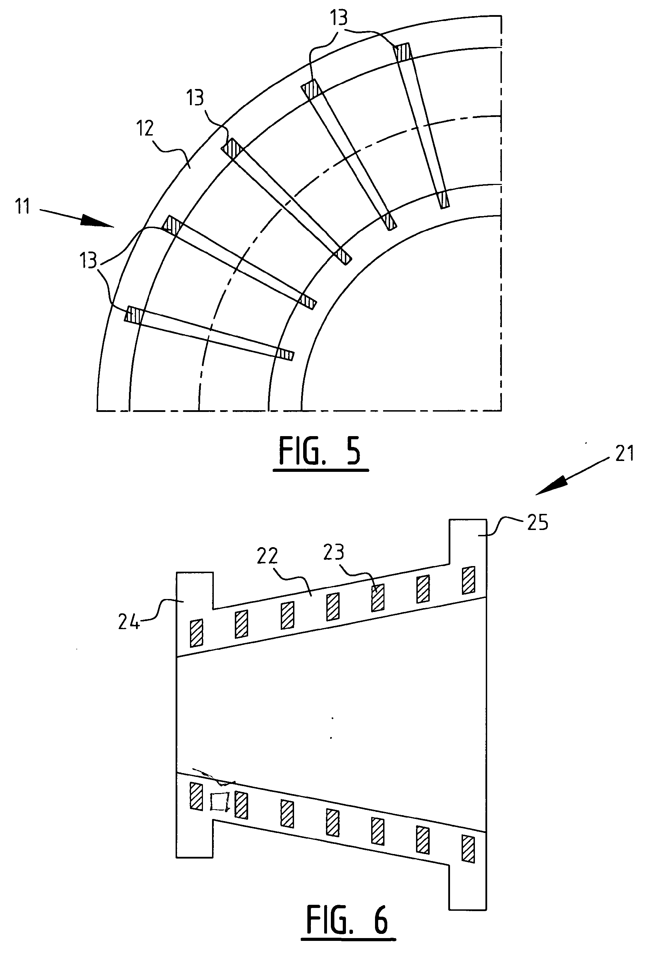

In figure 5, the bent flexible pipe 11 that is used in dredging comprises a rubber, tubular part 12, which is provided with several wear-resistant rings 13. Figure 5 is merely a schematic representation, besides the rubber tubular part 12 and the rings 13, a practical embodiment of a flexible pipe 13 will usually also comprise at least an outer layer arranged around the rubber part 12.

The wear-resistant rings 13 are provided in coaxial, regularly spaced-apart relationship in the rubber part 12, with the rings 13 and the rubber part 12 having the same internal diameter, so that a substantially smooth inner surface of the flexible pipe 12 alternately consisting of rubber and a wear-resistant material is obtained. The outer surface of the rubber part 12 only consists of rubber.

The thickness of the wear-resistant ring 13 is smaller in the inside bend of the pipe than in the outside bend. As a result, the ring 13 is trapezoidal in section in the outside bend, with the thickness of the rings 13 being smaller near the inner diameter than near the outer diameter. In the inside bend, the ring 13 is trapezoidal in section, with the thickness of the rings 13 being larger near the inner diameter than near the outer diameter.

According to figure 6, a flexible reducing piece 21 comprises a rubber tubular part 22, whose inner wall and outer wall extend conically, parallel to each other, with a flange 24, 25 being present at the two ends. Wear-resistant rings 23 are provided in the rubber of the conical tubular part 22. Said wear-resistant rings 23 are likewise conical in shape, so that they have a parallelogram-shaped section, such that the inner walls of the conical rings 23 extend parallel with respect to the inner wall of the conical tubular part 22.

It can be seen that in the case of the rings shown in figure 6 the inner walls of the rings 23 do not lie in the same plane as the inner wall of the tubular part 22, but that, on the contrary, the rings 23 are surrounded by rubber. Said rubber can wear away in practice, as a result of which the rings 23 will come to lie at the inner surface of the pipe 22 yet. This aspect may also apply to the embodiments that have been previously discussed.

## Claims

1. A method for manufacturing a flexible pipe for transporting abrasive slurry, wherein a tubular body of a flexible polymer, such as rubber, is formed, and wherein coaxial, wear-resistant rings are provided in the polymer along the length of the tube, which rings and which tubular body have at least substantially the same internal diameter, **characterised in that** the rings are made by moulding a heated, flowable metal or a ceramic powder in a mould.

2. A flexible pipe for transporting abrasive slurry, comprising a tubular body of a flexible polymer, such as rubber, and a multitude of coaxial, wear-resistant rings provided in the polymer along the length of the tube, which rings and which tubular body have substantially the same internal diameter, **characterised in that** the thickness of the rings near their inner circumference is smaller over at least part of their circumference than the thickness of the rings near their outer circumference.

3. A flexible pipe according to claim 2, wherein the tubular body is bent, and wherein the average thickness of the rings on the side of the inside bend is smaller than the average thickness of the rings near the outside bend.

4. A flexible pipe according to claim 2 or 3, wherein the cross-section of the aforesaid part of the rings is substantially trapezoidal.

5. A flexible pipe according to claim 2 or 3, wherein the cross-section of the aforesaid part of the rings is substantially T-shaped.

6. A flexible pipe according to any one of the preceding claims 2-5, wherein the rings comprise an annular part spaced from their inner circumference that has a ductility higher than that of the rings near the inner circumference.

7. A flexible pipe according to claim 6, wherein the part having the higher ductility is made of mild steel.

8. A flexible pipe according to claim 6 or 7, wherein the part having the lower ductility is made of cast iron, hard-faced steel or a ceramic material.

9. A flexible pipe for transporting abrasive slurry, comprising a tubular body of a flexible polymer, such as rubber, and a multitude of coaxial, wear-resistant rings provided in the polymer along the length of the tube, wherein said rings and said tubular body have substantially the same internal diameter, and wherein the rings comprise an annular part spaced from their inner circumference that has a ductility higher than that of the rings near the inner circumference.

10. A flexible pipe according to claim 9, wherein the part having the higher ductility is made of mild steel.

11. A flexible pipe according to claim 9 or 11, wherein the part having the lower ductility is made of cast iron, hard-faced steel or a ceramic material.

12. A conical, flexible pipe for transporting abrasive slurry, comprising a conical, tubular body of a flexible polymer, such as rubber, and a multitude of coaxial, wear-resistant rings provided in the polymer along the length of the tube, wherein the internal diameter of the rings and that of the tubular body gradually increases in the axial direction, being at least substantially the same, and wherein the inner surface of the rings is conical.

## Patentansprüche

1. Verfahren zur Herstellung eines flexiblen Rohres für den Transport abrasiver Aufschlämmung, wobei ein röhrenförmiger Körper aus einem flexiblen Polymer, wie etwa Gummi, ausgebildet wird und wobei koaxiale, abriebbeständige Ringe entlang der Länge des Rohres im Polymer vorgesehen sind, wobei die Ringe und der röhrenförmige Körper wenigstens im wesentlichen denselben Innendurchmesser aufweisen, **dadurch gekennzeichnet, dass** die Ringe durch Ausformen eines erwärmten, fließfähigen Metalls oder eines Keramikpulvers in einer Form hergestellt werden.

2. Flexibles Rohr zum Transport abrasiver Aufschlämmung, das einen röhrenförmigen Körper aus einem flexiblen Polymer, wie etwa Gummi, und eine Mehrzahl koaxialer, abriebbeständiger Ringe umfasst, die entlang der Länge des Rohres im Polymer vorgesehen sind, wobei die Ringe und der röhrenförmige Körper im wesentlichen denselben Innendurchmesser aufweisen, **dadurch gekennzeichnet, dass** die Dicke der Ringe nahe ihres Innenumfanges über wenigstens einen Teil ihres Umfanges geringer ist als die Dicke der Ringe nahe ihres Außenumfanges.

3. Flexibles Rohr nach Anspruch 2, wobei der röhrenförmige Körper gebogen ist und wobei die durchschnittliche Dicke der Ringe auf der Seite der Innenseitenbiegung geringer ist als die durchschnittliche Dicke der Ringe nahe der Außenseitenbiegung.

4. Flexibles Rohr nach Anspruch 2 oder 3, wobei der Querschnitt des vorgenannten Teils der Ringe im wesentlichen trapezförmig ist.

5. Flexibles Rohr nach Anspruch 2 oder 3, wobei der Querschnitt des vorgenannten Teils der Ringe im wesentlichen T-förmig ist.

6. Flexibles Rohr nach einem der vorangehenden Ansprüche 2-5, wobei die Ringe einen ringförmigen, von ihrem Innenumfang beabstandeten Teil umfassen, der eine höhere Duktilität aufweist als diejenige der Ringe nahe dem Innenumfang.

7. Flexibles Rohr nach Anspruch 6, wobei der Teil mit der höheren Duktilität aus Weichstahl hergestellt ist.

8. Flexibles Rohr nach Anspruch 6 oder 7, wobei der Teil mit der niedrigeren Duktilität aus Gusseisen, mit einer härteren Außenschicht versehenem Stahl oder einem Keramikmaterial hergestellt ist.

9. Flexibles Rohr zum Transport abrasiver Aufschlämmung, das einen röhrenförmigen Körper aus einem flexiblen Polymer, wie etwa Gummi, und eine Mehrzahl koaxialer, abriebbeständiger Ringe umfasst, die entlang der Länge des Rohres im Polymer vorgesehen sind, wobei die Ringe und der röhrenförmige Körper im wesentlichen denselben Innendurchmesser aufweisen und wobei die Ringe einen ringförmigen, von ihrem Innenumfang beabstandeten Teil aufweisen, der eine höhere Duktilität aufweist als diejenige der Ringe nahe dem Innenumfang.

10. Flexibles Rohr nach Anspruch 9, wobei der Teil mit der höheren Duktilität aus Weichstahl hergestellt ist.

11. Flexibles Rohr nach Anspruch 9 oder 11, wobei der Teil mit der niedrigeren Duktilität aus Gusseisen, mit einer härteren Außenschicht versehenem Stahl oder einem Keramikmaterial hergestellt ist.

12. Konisches, flexibles Rohr zum Transport abrasiver Aufschlämmung, das einen konischen, röhrenförmigen Körper aus einem flexiblen Material, wie etwa Gummi, und eine Mehrzahl koaxialer, abriebbeständiger Ringe umfasst, die entlang der Länge des Rohres im Polymer vorgesehen sind, wobei der Innendurchmesser der Ringe und derjenige des röhrenförmigen Körpers in der axialen Richtung allmählich zunimmt, wobei er wenigstens im wesentlichen derselbe ist, und wobei die Innenfläche der Ringe konisch ist.

## Revendications

1. Procédé de fabrication d'un tuyau souple permettant de transporter une bouillie abrasive, dans lequel un corps tubulaire en polymère souple, tel que du caoutchouc, est formé, et dans lequel des bagues coaxiales résistant à l'usure sont placées dans le polymère sur la longueur du tube, lesquelles bagues et lequel corps tubulaire présentent au moins sensiblement le même diamètre intérieur, **caractérisé en ce que** les bagues sont fabriquées par moulage d'un métal liquide chauffé ou d'une poudre céramique dans un moule.

2. Tuyau souple permettant de transporter une bouillie abrasive, comprenant un corps tubulaire en polymère souple, tel que du caoutchouc, et une multitude de bagues coaxiales résistant à l'usure placées dans le polymère sur la longueur du tube, lesquelles bagues et lequel corps tubulaire présentent sensiblement le même diamètre intérieur, **caractérisé en ce que** l'épaisseur des bagues proches de leur circonférence intérieure est inférieure sur au moins une partie de leur circonférence à l'épaisseur des bagues proches de leur circonférence extérieure.

3. Tuyau souple selon la revendication 2, dans lequel le corps tubulaire est cintré, et dans lequel l'épaisseur moyenne des bagues sur le côté du cintrage interne est inférieure à l'épaisseur moyenne des bagues proches du cintrage externe.

4. Tuyau souple selon la revendication 2 ou 3, dans lequel la section transversale de la partie susmentionnée des bagues est sensiblement trapézoïdale.

5. Tuyau souple selon la revendication 2 ou 3, dans lequel la section transversale de la partie susmentionnée des bagues est sensiblement en forme de T.

6. Tuyau souple selon l'une des revendications précédentes 2 à 5, dans lequel les bagues comprennent une partie annulaire espacée de leur circonférence intérieure qui présente une ductilité supérieure à celle des bagues proches de la circonférence intérieure.

7. Tuyau souple selon la revendication 6, dans lequel la partie présentant la ductilité la plus élevée est en acier doux.

8. Tuyau souple selon la revendication 6 ou 7, dans lequel la partie présentant la ductilité la plus faible est en fonte, en acier dur ou en céramique.

9. Tuyau souple permettant de transporter une bouillie abrasive, comprenant un corps tubulaire en polymère souple, tel que du caoutchouc, et une multitude de bagues coaxiales résistant à l'usure placées dans le polymère sur la longueur du tube, dans lequel lesdites bagues et ledit corps tubulaire présentent sensiblement le même diamètre intérieur, et dans lequel les bagues comprennent une partie annulaire espacée de leur circonférence intérieure qui présente une ductilité supérieure à celle des bagues proches de la circonférence intérieure.

10. Tuyau souple selon la revendication 9, dans lequel la partie présentant la ductilité la plus élevée est en acier doux.

11. Tuyau souple selon la revendication 9 ou 11, dans lequel la partie présentant la ductilité la plus faible est en fonte, en acier dur ou en céramique.

12. Tuyau souple conique permettant de transporter une bouillie abrasive, comprenant un corps tubulaire conique en polymère souple, tel que du caoutchouc, et une multitude de bagues coaxiales résistant à l'usure placées dans le polymère sur la longueur du tube, dans lequel le diamètre intérieur des bagues et celui du corps tubulaire augmente graduellement dans la direction axiale, étant au moins sensiblement le même, et dans lequel la surface intérieure des bagues est conique.
